# EUROPÄISCHE PATENTSCHRIFT

(11) **EP 2 402 625 B1**
(45) Veröffentlichungstag und Bekanntmachung des Hinweises auf die Patenterteilung: **31.10.2012**
(21) Anmeldenummer: 11004991.3
(22) Anmeldetag: 18.06.2011
(51) Int. Cl.: F16D 65/12, F16D 69/02

(54) **Verbundbremsscheibe und Verfahren zu deren Herstellung**
Compound brake disc and method for its manufacture
Disque de frein composite et procédé destiné à sa fabrication

(30) Priorität: 01.07.2010 DE 102010025815
(43) Veröffentlichungstag der Anmeldung: 04.01.2012
(73) Patentinhaber: Daimler AG, 70327 Stuttgart (DE)
(72) Erfinder: Mayer, Ralph, 85049 Ingolstadt (DE)
(74) Vertreter: JENSEN & SON

(56) Entgegenhaltungen:
- WO-A1-93/23187
- WO-A2-2004/074535
- DE-A1-102007 020 891

## Beschreibung

Die Erfindung betrifft eine Verbundbremsscheibe die einen Bremstopf und einen koaxial daran angeordneten Reibring umfasst, sowie eine Sprühkompaktieranlage zur Fertigung der Verbundbremsscheibe und ein entsprechendes Herstellungsverfahren.

Im Zuge der Leichtbauweise im Kraftfahrzeugbau ist der Einsatz von Verbundbremsscheiben bekannt, bei denen der ringförmige Reibkörper respektive der Reibring, der an dem Bremstopf angeordnet ist, zunehmend aus Leichtbauwerkstoffen, vor allem auf Basis von Aluminium-Legierungen anstelle auf Basis von Eisen- oder Stahl basiertem Werkstoff gefertigt ist. So sind Aluminium-Legierungen bekannt, die den Anforderungen hinsichtlich mechanischer und thermischer Eigenschaften an einen Reibring entsprechen. Hier werden vor allem hochfeste Aluminium-Legierungen, die als Legierungselemente beispielsweise Silizium, Magnesium, Kupfer, Zink, Nickel, Mangan oder auch Eisen enthalten können, eingesetzt. Günstige Zusammensetzungen sind dem Fachmann bekannt. Um einen Reibring aus einer Aluminium-Legierung zu schaffen, der zudem die für die Bremseigenschaften des Reibrings notwendigen guten tribologischen Eigenschaften aufweist, ist die Verwendung von Metallmatrixverbund-Legierungen bekannt, bei denen die Metallmatrix durch die Aluminium-Legierung gebildet wird. Eine sogenannte MMC-Aluminium-Legierung weist zusätzlich bis zu 20 % Hartstoffpartikel, häufig aus Siliziumkarbid oder Korund auf, die der Legierung eine hohe Festigkeit mit guten tribologischen Eigenschaften verleihen.

Aus der DE 10 2007 020 891 A1 ist eine Bremsscheibe bekannt, die nachträglich mit einer Reibflächenbeschichtung versehen wird, die durch Sprühkompaktierung hergestellt wird.

Andererseits ist die Herstellung von massiven Bremsscheiben oder Reibringen aus einem durch Sprühkompaktierung hergestellten Material bekannt, bei dem allerdings ein hohes Zerspanvolumen anfällt, um die Bremsscheibe bzw. den Reibring seiner gewünschten Form nahe zu bringen. Das alternative Fügen von Reibring an Bremstopf, beispielsweise durch Reibschweißen oder ähnliches, ist aufwendig und bedarf eines hohen Absicherungsaufwandes.

Ausgehend von diesem Stand der Technik ist es wünschenswert, eine Verbundbremsscheibe unter verringertem Material- und Prozessaufwand beim Sprühkompaktieren bereitzustellen, die kein oder nur wenig Zerspanvolumen aufweist und eine verbesserte Verbindung zwischen Bremstopf und Reibring bereitstellt.

Diese Aufgabe wird durch eine Verbundbremsscheibe mit den Merkmalen des Anspruchs 1 gelöst.

Ferner wird mit der Sprühkompaktieranlage, die die Merkmale des Anspruchs 5 aufweist, eine Vorrichtung offenbart, die zur Herstellung einer erfindungsgemäßen Verbundbremsscheibe geeignet ist.

Die Aufgabe der Herstellung einer solchen Bremsscheibe wird durch ein Verfahren mit den Merkmalen des Anspruchs 7 gelöst.

Weiterbildungen der Gegenstände sind in den jeweiligen Unteransprüchen ausgeführt.

Eine erste Ausführungsform bezieht sich auf eine Verbundbremsscheibe, die aus einem Bremstopf und aus einem daran koaxial befestigten Reibring besteht, wobei der Bremstopf an seiner zylindrischen Umfangsfläche radial ausgebildete Formschlusselemente aufweist, die eine formschlüssige Verbindung mit dem durch Sprühkompaktieren an die zylindrische Umfangsfläche ausgebauten Reibring eingehen. Diese Verbundbremsscheibe hat somit vorteilhaft ein geringeres Volumen des sprühkompaktierten Anteils und damit auch einen geringeren Zerspananteil, lediglich die Reibflächen des Reibringes müssen gegebenenfalls nachbearbeitet werden. Durch den erfindungsgemäß direkt an den Bremstopf gesprühten Reibring entfällt der Schritt des Fügens eines gefertigten Reibrings an den Bremstopf, so dass die Fertigungstaktzeiten verkürzt werden. Der für die Verbundbremsscheibe erforderliche Bremstopf ist einfach herzustellen, wobei die für den Formschluss notwendigen Formschlusselemente in der Umfangsfläche des Bremstopfs durch Vorsprünge, etwa Noppen oder Rippen, oder durch Vertiefungen ausgebildet sein können.

Der Bremstopf kann einfach aus einer Aluminium- oder Stahllegierung gefertigt, beispielsweise gegossen sein.

Als Material für den Reibring kommt ein Metall bzw. eine Metalllegierung, wie eine Leichtmetall-Legierung, insbesondere eine Metallmatrix-Verbundlegierung vor allem auf Aluminium-Basis mit Hartstoffpartikeln in Frage.

Eine erfindungsgemäße Ausführungsform des Verfahrens zur Herstellung einer solchen Verbundbremsscheibe umfasst zunächst das Fertigen des Bremstopfes, wobei an dessen zylindrischer Umfangsfläche die Formschlusselemente radial ausgebildet werden. Dies kann beispielsweise während des Urformens des Bremstopfes geschehen oder in einem nachfolgenden Umformprozess zur Bildung der Formschlusselemente erfolgen. Der so gefertigte Bremstopf wird zentral in einen rotierend antreibbaren Formteller einer Sprühkompaktieranlage eingelegt, deren Sprüheinrichtung zum Ausdüsen des geschmolzenen Metalls auf einen ringförmigen Spalt gerichtet ist, der zwischen der zylindrischen Umfangsfläche des Bremstopfes und dem Rand des Formtellers gebildet ist und zur Bildung des Reibringes vorgesehen ist.

In diesen Spalt wird die Schmelze des gewünschten Reibringmaterials bis an die zylindrische Umfangsfläche des Bremstopfes gesprüht, so dass sich beim erstarren Lassen der Schmelze der Reibring an der zylindrischen Umfangsfläche bildet, der durch die Formschlusselemente des Bremstopfes einen hervorragenden Formschluss mit diesem eingeht. Dieser Formschluss ist einfacher frei zu prüfen als neuartige Materialverbindungen beim Schweißen. Durch den in Folge des Sprühkompaktierens erreichbaren hohen Abkühlgradienten ist quasi jegliches Topfmaterial verwendbar. Soll zur Bildung des Reibrings eine Metallmatrixverbund-Legierung verwendet werden, so umfasst das Verfahren zusätzlich das Einbringen von Hartstoffpartikeln in den Sprühstrahl der Metallschmelze, während diese in den Spalt gesprüht wird.

Um ein Entformen der so gefertigten Verbundbremsscheibe aus dem Formteller der Sprühkompaktieranlage zu erleichtern, kann zudem das Anordnen einer Trennschicht in dem Formteller vorgesehen sein, die zumindest den Bereich des ringförmigen Spaltes zwischen der zylindrischen Umfangsfläche des Bremstopfes und dem Rand des Formtellers überdeckt. Diese Trennschicht kann durch Einlegen einer Trennschichtscheibe oder durch Auftragen eines Trennschicht bildenden Mittels realisiert werden.

Schließlich bezieht sich eine Ausführungsform der Erfindung auf eine Sprühkompaktieranlage, die bei der Herstellung der Verbundbremsscheibe verwendbar ist und mit der der Schritt des Sprühkompaktierens des erfindungsgemäßen Verfahrens durchgeführt werden kann. Dazu ist der rotierend antreibbare Formteller der Sprühkompaktieranlage derart ausgebildet, dass der zwischen der zylindrischen Umfangsfläche des zentriert eingelegten Bremstopfes und einem Rand des Formtellers entstehende ringförmige Spalt den vorgesehenen Abmessungen des Reibrings entspricht. Die Sprüheinrichtung der Sprühkompaktieranlage ist dann auf den Spalt gerichtet, um den Reibring auszubilden.

Ferner kann die Sprühkompaktieranlage auf dem Formteller zumindest eine Trennschicht umfassen, die zumindest in dem Bereich des ringförmigen Spaltes angeordnet bzw. ausgebildet ist.

Diese und weitere Vorteile werden durch die nachfolgende Beschreibung unter Bezug auf die begleitenden Figuren dargelegt.

Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: eine schematische Seitenansicht auf einen zentriert in einem Formteller angeordneten Bremstopf, der Formteller ist dazu in einer Schnittansicht dargestellt,
- Fig. 2: eine Seitenquerschnittansicht einer erfindungsgemäßen Verbundbremsscheibe,
- Fig. 3: eine perspektivische Ansicht auf einen durch Urformen hergestellten Bremstopf mit Formschlusselementen,
- Fig. 4: eine Seiten- Ansicht einer weiteren Ausführungsform eines Bremstopfes mit in einem Umformschritt erzeugten Formschlusselementen.
- Fig. 5: eine perspektivische Ansicht der Ausführungsform des Bremstopfes aus Fig. 4.

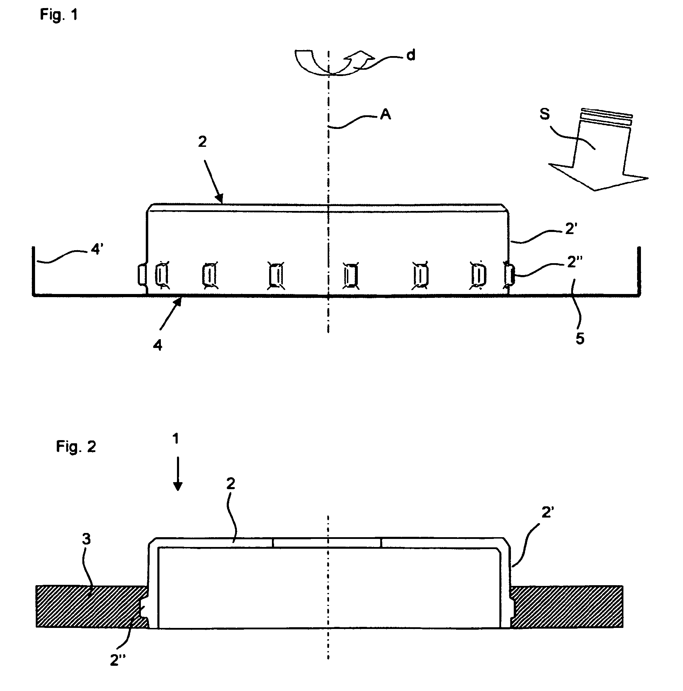

Die Erfindung bezieht sich auf eine Verbundbremsscheibe 1, wie sie in Fig. 2 dargestellt ist. Die Verbundbremsscheibe 1 besteht aus einem Bremstopf 2, der aus eine beliebigen Material, vorzugsweise aus einer Aluminium- oder Stahllegierung hergestellt sein kann, und von dem sich koaxial ein Reibring 3 erstreckt, der die Reibflächen der Verbundbremsscheibe bereitstellt. Bei dem Reibring 3 handelt es sich um einen sprühkompaktierten Reibring 3, vorzugsweise aus einem Leichtbaumaterial, insbesondere aus einer MMC-Aluminium-Legierung mit Hartstoffpartikeln, die erfindungsgemäß in einem Formschluss mit dem Bremstopf 2 verbunden ist, der dazu an seiner zylindrischen Umfangsfläche 2' eine Vielzahl von radial ausgebildeten Formschlusselementen 2" aufweist.

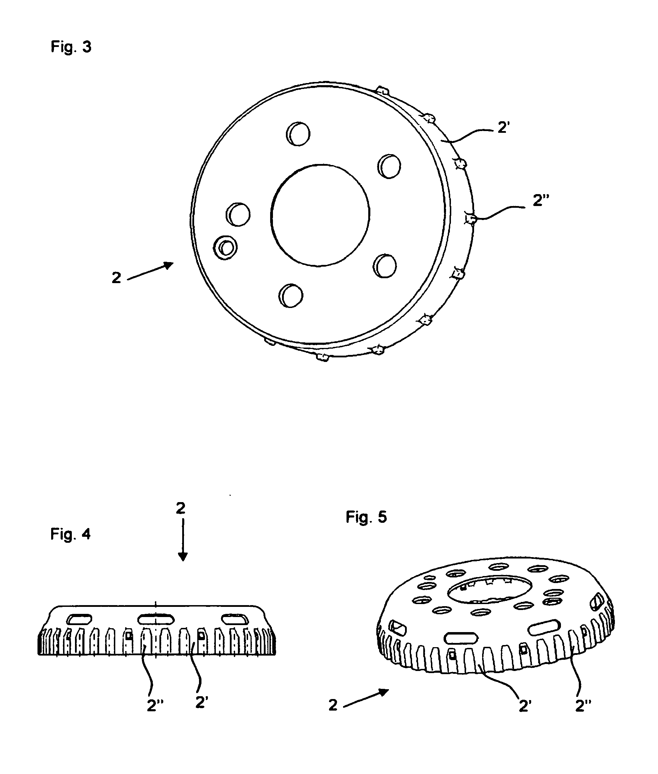

Beispiele zur Bildung der Verbundbremsscheibe geeigneter Bremstöpfe 2 sind in Fig. 3, 4 und 5 dargestellt. Der in Fig. 3 gezeigte Bremstopf 2, der dem Bremstopf 2 aus Fig. 1 und 2 entspricht, weist als Formschlusselemente 2" Vorsprünge bzw. Mitnehmerausstellungen auf, die umfänglich über die Zylinderfläche 2' des Bremstopfes 2 verteilt sind. Dieser Topf mit den Formschlusselementen 2" wurde durch Urformen gewonnen. Der in Fig. 4 und 5 dargestellte Bremstopf 2 weist hingegen in seiner Umfangsfläche 2' eine rippenartige Struktur mit Vertiefungen 2' als Formschlusselemente 2' auf, die in einem Umformprozess eines bereitgestellten Topfes 2 erzeugt wurden. Außer den gezeigten Beispielen ist noch eine Vielzahl von Formschlusselementen an der Umfangsfläche denkbar, die zur Bereitstellung eines Formschlusses des Bremstopfes mit einem daran sprühkompaktierten Reibring geeignet sind.

Fig. 1 zeigt den Formteller 4 einer Sprühkompaktieranlage, in der der Blockpfeil S die Sprüheinrichtung respektive eine Sprühstrahlrichtung symbolisiert. Der Bremstopf 2 mit den Formschlusselementen 2" an der Zylinderfläche 2' wird entsprechend der Rotationsachse A des Formtellers 4 zentriert eingelegt. Zwischen der Zylinderfläche 2' des Bremstopfes 2 und dem Rand 4' des Formtellers 4 besteht ein ringförmiger Spalt 5, in den die Sprüheinrichtung S gerichtet ist. Der Formteller 4 ist mit seinem Durchmesser und der Höhe des Randes 4' derart ausgelegt, dass der gebildete Spalt 5 den vorgesehenen Abmessungen für den Reibring entspricht. Zur Durchführung der Sprühkompaktierung des Reibringes wird der Formteller 4 zusammen mit dem darauf angeordneten Bremstopf 2 in Rotation um die Achse A versetzt, angedeutet durch Pfeil d, während mittels der Sprüheinrichtung S die Metallschmelze in den Spalt 5 an die zylindrische Umfangsfläche 2' gedüst wird, bis der sprühkompaktierte Reibring die gewünschte Höhe erreicht hat. So bildet sich der Formschluss zu dem Bremstopf schon während der Herstellung des Reibrings, der mit einem geringeren Material- und Prozessaufwand als bislang erzeugt werden kann. Dadurch, dass eine zerspanende Nachbearbeitung des sprühkompaktierten Reibrings verringert werden kann, können die Taktzeiten verkürzt werden und gleichzeitig längere Werkzeugstandzeiten erreicht werden.

Für den Fall, dass eine Metallmatrix-Verbundlegierung zur Bildung des Reibrings zum Einsatz kommen soll, können bekanntermaßen Hartstoffpartikel in den Sprühstrahl der Metallschmelze während des Sprühkompaktierens eingebracht werden.

Der Bremstopf kann insbesondere in dem Bereich, indem er mit dem sprühkompaktierten Material in Kontakt steht, beheizt werden, wobei die Beheizung so erfolgen kann, dass der Bremstopf eine ähnlich Abkühlgeschwindigkeit wie der sprühkompaktierte Reibring erfährt.

Der Formteller kann an seiner Bodenfläche, wenigstens jedoch zumindest an der Fläche des Ringspalts und an der Innenwand des Randes mit einer Trennschicht ausgestattet sein, um die Verbundbremsscheibe mit dem an den Bremstopf sprühkompaktierten Reibring leicht aus dem Formteller entfernen zu können. Dazu kann eine zusätzliche Trennschicht eingelegt werden, alternativ kann die Innenwandung des Formtellers auch mit einem Trennschicht bildenden Material vorbehandelt werden.

## Patentansprüche

1. Verbundbremsscheibe (1), die einen Bremstopf (2) und einen Reibring (3), der koaxial an dem Bremstopf (2) angeordnet ist, umfasst,
**dadurch gekennzeichnet, dass**
der Bremstopf (2) radial an einer zylindrischen Umfangsfläche (2') ausgebildete Formschlusselemente (2") aufweist, die formschlüssig mit dem Reibring (3) verbunden sind, der an der zylindrischen Umfangsfläche (2) sprühkompaktiert angeordnet ist.

2. Verbundbremsscheibe (1) nach Anspruch 1,
**dadurch gekennzeichnet, dass**
die Formschlusselemente (2") Vorsprünge, insbesondere Noppen oder Rippen, oder Vertiefungen sind.

3. Verbundbremsscheibe (1) nach Anspruch 1 oder 2,
**dadurch gekennzeichnet, dass**
der Bremstopf (2) aus einer Aluminiumlegierung oder Stahllegierung gefertigt ist.

4. Verbundbremsscheibe (1) nach zumindest einem der Ansprüche 1 bis 3,
**dadurch gekennzeichnet, dass**
der sprühkompaktierte Reibring (3) aus einem Metall, einer Metalllegierung, einer Metallmatrix-Verbundlegierung mit Hartstoffpartikeln, insbesondere aus einer MMC-Aluminiumlegierung besteht.

5. Sprühkompaktieranlage zur Herstellung einer Verbundbremsscheibe (1) nach zumindest einem der Ansprüche 1 bis 4
**dadurch gekennzeichnet, dass**
die Sprühkompaktieranlage einen rotierend antreibbaren Formteller (4) aufweist, auf dem der Bremstopf (2) zentriert zur Anlage kommt, wobei zwischen der zylindrischen Umfangsfläche (2') des zentriert eingelegten Bremstopfs (2) und einem Rand (4') des Formtellers (4) ein ringförmiger Spalt (5) bereitgestellt ist, wobei der Formteller (4) einen Durchmesser aufweist, der einem vorbestimmten Außendurchmesser des Reibrings (3) entspricht, und wobei eine Sprüheinrichtung (S) zum Ausdüsen einer Metallschmelze der auf den Spalt (5) gerichtet ist.

6. Sprühkompaktieranlage nach Anspruch 5,
**dadurch gekennzeichnet, dass**
auf dem Formteller (4) zumindest in dem Bereich des ringförmigen Spalts (5) des Formtellers (4) zwischen der zylindrischen Umfangsfläche (2') des Bremstopfs (2) und dem Rand (4') zumindest eine Trennschicht ausgebildet ist.

7. Verfahren zur Herstellung einer Verbundbremsscheibe (1) nach zumindest einem der Ansprüche 1 bis 4 unter Verwendung einer Sprühkompaktieranlage nach Anspruch 5 oder 6,
umfassend die Schritte
- Fertigen des Bremstopfs (2) mit radial an seiner zylindrischen Umfangsfläche (2') ausgebildeten Formschlusselementen (2"),
- zentriert Einlegen des Bremstopfs (2) in den rotierend antreibbaren Formteller (4) der Sprühkompaktieranlage, wobei die Sprüheinrichtung (S) auf den zur Bildung des Reibrings (3) vorgesehenen ringförmigen Spalt (5) gerichtet ist,
- Sprühen der Metallschmelze in den Spalt (5) an die zylindrische Umfangsfläche (2') des Bremstopfs (2) und erstarren Lassen unter Bildung des Reibrings (3) an der zylindrischen Umfangsfläche (2), wobei der Reibring (3) sich mittels der Formschlusselemente (2") formschlüssig mit dem Bremstopf (2) verbindet.

8. Verfahren nach Anspruch 7,
wobei das Fertigen des Bremstopfs (2) einen Urform- oder einen Umformprozess zum Formen der Formschlusselemente (2") umfasst.

9. Verfahren nach Anspruch 7 oder 8,
umfassend den Schritt
- Anordnen zumindest einer Trennschicht zumindest in dem Bereich des ringförmigen Spalts (5) des Formtellers (4) zwischen der zylindrischen Umfangsfläche (2') des Bremstopfs (2) und dem Rand (4') durch Einlegen einer Trennschichtscheibe oder Ausbilden der Trennschicht durch Auftragen eines Trennschicht bildenden Mittels.

10. Verfahren nach zumindest einem der Ansprüche 7 bis 9,
umfassend den Schritt
- Einbringen von Hartstoffpartikeln in einen Sprühstrahl der Metallschmelze.

## Claims

1. Composite brake disc (1) comprising a brake pot (2) and a friction ring (3) arranged coaxially on the brake pot (2),
**characterised in that**
the brake pot comprises positive locking elements (2") formed radially on a cylindrical circumferential surface (2') and positively connected to the friction ring (3), which is spray-compacted on the cylindrical circumferential surface (2).

2. Composite brake disc (1) according to claim 1,
**characterised in that**
the positive locking elements (2") are projections, in particular pimples or ribs, or indentations.

3. Composite brake disc (1) according to claim 1 or 2,
**characterised in that**
the brake pot (2) is made of an aluminium or steel alloy.

4. Composite brake disc (1) according to one or more of claims 1 to 3,
**characterised in that**
the spray-compacted friction ring (3) consists of a metal, a metal alloy, or a metal matrix composite alloy with hard material particles, in particular of an MMC aluminium alloy.

5. Spray-compacting system for the production of a composite brake disc (1) according to one or more of claims 1 to 4,
**characterised in that**
the spray-compacting system comprises a rotationally driven mould plate (4) on which the brake pot (2) comes to lie and is centred, wherein an annular gap (5) is provided between the cylindrical circumferential surface (2') of the centrally placed brake pot (2) and an edge (4') of the mould plate (4), the mould plate (4) having a diameter corresponding to a preset outer diameter of the friction ring (3), and wherein a spraying device (S) is directed towards the gap (5) for emitting a jet of metal melt.

6. Spray compacting system according to claim 5,
**characterised in that**
at least one barrier layer is formed on the mould plate (4), at least in the region of the annular gap (5) of the mould plate (4) between the cylindrical circumferential surface (2') of the brake pot (2) and the edge (4').

7. Method for the production of a composite brake disc (1) according to one or more of claims 1 to 4, using a spray-compacting system according to claim 5 or 6, **characterised by** the steps of
- producing the brake pot (2) with positive locking elements (2") formed radially on its cylindrical circumferential surface (2'),
- central installation of the brake pot (2) into the rotationally driven mould plate (4) of the spray-compacting system, the spraying device (S) being directed towards the annular gap (5) provided for the formation of the friction ring (3),
- spraying of the metal melt into the gap (5) at the cylindrical circumferential surface (2') of the brake pot (2) and solidification while forming the friction ring (3) at the cylindrical circumferential surface (2'), the friction ring (3) being positively joined to the brake pot (2) by means of the positive locking elements (2").

8. Method according to claim 7,
wherein the production of the brake pot (2) includes a forming or shaping process for forming the positive locking elements (2").

9. Method according to claim 7 or 8,
comprising the step of
- arranging at least one barrier layer at least in the region of the annular gap (5) of the mould plate (4) between the cylindrical circumferential surface (2') of the brake pot (2) and the edge (4') by installing a barrier layer disc or forming the barrier layer by applying a barrier layer-forming agent.

10. Method according to one or more of claims 7 to 9,
comprising the step of
- introducing hard material particles into the spray jet of the metal melt.

## Revendications

1. Disque de frein composite (1) qui comprend une coupelle de frein (2) et un anneau de friction (3) lequel est disposé coaxialement sur la coupelle de frein (2)
**caractérisé en ce que**
la coupelle de frein (2) présente radialement sur une surface périphérique (2') cylindrique des éléments (2") à complémentarité de forme qui sont reliés par complémentarité de forme à l'anneau de friction (3) lequel est compacté par pulvérisation sur la surface périphérique (2) cylindrique.

2. Disque de frein composite (1) selon la revendication 1, **caractérisé en ce que** les éléments (2") à complémentarité de forme sont des saillies, en particulier des boutons ou des nervures ou des cavités.

3. Disque de frein composite (1) selon la revendication 1 ou la revendication 2,
**caractérisé en ce que**
la coupelle de frein (2) est fabriquée à partir d'un alliage d'aluminium ou d'acier.

4. Disque de frein composite (1) selon au moins une quelconque des revendications 1 à 3, **caractérisé en ce que**
l'anneau de friction (3) compacté par pulvérisation se compose d'un métal, d'un alliage de métal, d'un alliage composite à matrice métallique avec des particules de matière dure, en particulier d'un alliage d'aluminium MMC.

5. Dispositif de compactage par pulvérisation pour fabriquer un disque de frein composite (1) selon au moins l'une quelconque des revendications 1 à 4,
**caractérisé en ce que**
le dispositif de compactage par pulvérisation présente un plateau de formage (4) entraînable par rotation, au milieu duquel la coupelle de frein (2) vient prendre appui,
une fente annulaire (5) se trouvant entre la surface périphérique (2') cylindrique de la coupelle de frein (2) placée au centre et un bord du plateau de formage (4),
le plateau de moulage (4) présentant un diamètre qui correspond à un diamètre extérieur prédéfini de l'anneau de friction (3),
et un dispositif de pulvérisation (S) pour pulvériser un bain de fusion étant orienté vers la fente (5).

6. Dispositif de compactage par pulvérisation selon la revendication 5, **caractérisé en ce que**
sur le plateau de formage (4) au moins dans la zone de la fente annulaire (5) du plateau de formage (4) entre la surface périphérique (2') cylindrique de la coupelle de frein (2) et le bord (4') se forme au moins une couche de séparation.

7. Procédé de fabrication d'un disque de frein composite (1) selon au moins l'une quelconque des revendications 1 à 4 en utilisant un dispositif de compactage par pulvérisation selon la revendication 5 ou la revendication 6,
comprenant les étapes suivantes :
- fabriquer la coupelle de frein (2) avec des éléments (2") à complémentarité de forme conçus radialement sur sa surface périphérique (2') cylindrique,
- placer au milieu la coupelle de frein (2) sur le plateau de formage (4) entraînable par rotation du dispositif de compactage par pulvérisation, le dispositif de pulvérisation (S) étant orienté vers la fente (5) annulaire prévue pour la formation de l'anneau de friction (3),
- pulvériser le bain de fusion dans la fente (5) sur la surface périphérique (2') cylindrique de la coupelle de frein (2) et laisser se solidifier en formant l'anneau de friction (3) sur la surface périphérique (2) cylindrique, l'anneau de friction (3) se reliant au moyen des éléments (2") à complémentarité de forme à la coupelle de frein (2).

8. Procédé selon la revendication 7, la fabrication de la coupelle de frein (2) comprenant un processus de formage primaire ou déformation pour former les éléments (2") à complémentarité de forme.

9. Procédé selon la revendication 7 ou la revendication 8, comprenant l'étape suivante :
- disposer au moins une couche de séparation au moins dans la zone de la fente annulaire (5) du plateau de formage (4) entre la surface périphérique (2') cylindrique de la coupelle de frein (2) et le bord (4') en plaçant une plaque de couche de séparation ou en formant la couche de séparation par application d'un moyen formant une couche de séparation.

10. Procédé selon au moins l'une quelconque des revendications 7 à 9, comprenant l'étape suivante :
- introduire des particules de matière dure dans un jet de projection du bain de fusion.
